# EUROPÄISCHE PATENTSCHRIFT

(11) **EP 3 887 292 B1**
(45) Veröffentlichungstag und Bekanntmachung des Hinweises auf die Patenterteilung: **09.07.2025**
(21) Anmeldenummer: 18812129.7
(22) Anmeldetag: 29.11.2018
(51) Int. Cl.: B65G 47/86

(54) **VORRICHTUNG ZUM GREIFEN, HALTEN UND FÜHREN VON BEHÄLTERN, SOWIE VERFAHREN ZUM BETÄTIGEN EINER DERARTIGEN VORRICHTUNG**
DEVICE FOR GRIPPING, RETAINING AND GUIDING CONTAINERS, AND METHOD FOR ACTUATING SUCH A DEVICE
DISPOSITIF DE PRÉHENSION, DE RETENUE ET DE GUIDAGE DE RÉCIPIENTS, ET PROCÉDÉ PERMETTANT D'ACTIONNER UN TEL DISPOSITIF

(43) Veröffentlichungstag der Anmeldung: 06.10.2021
(73) Patentinhaber: Tyrolon GmbH, 6395 Hochfilzen (AT)
(72) Erfinder: SCHULNIG, Elmar, 6392 St. Jakob i.H. (AT)
(74) Vertreter: Meissner Bolte Partnerschaft mbB
(86) Internationale Anmeldenummer: PCT/EP2018/082977
(87) Internationale Veröffentlichungsnummer: WO 2020/108758

(56) Entgegenhaltungen:
- EP-A1- 2 799 347
- WO-A1-2018/108248
- JP-A- 2009 161 294

## Beschreibung

Die Erfindung betrifft eine Vorrichtung zum Greifen, Halten und Führen von Behältern, insbesondere von flaschenähnlichen Behältern. Ebenso beschrieben wird ein Verfahren zum Betätigen einer derartigen Vorrichtung.

Greif- und Transportvorrichtungen zum Greifen, Halten und/oder Führen von Behältern sind bereits aus dem Stand der Technik bekannt, insbesondere unter dem Namen "Klammerstern". Sie werden vornehmlich bei der fließbandtechnischen Bearbeitung von Behältern bzw. Behältnissen verwendet, die insbesondere zur Befüllung mit Flüssigkeiten oder anderweitigem Schüttgut vorgesehen sind. Auch werden derartige Vorrichtungen in Etikettiermaschinen verwendet, mit denen ein Etikett, welches beispielsweise den Inhalt des Behälters ausweist, auf diesen aufgebracht wird, oder auch für Reinigungs- oder Spülstationen, sogenannte "Rinser".

Unter dem Begriff "Behälter" sind im Zusammenhang mit der vorliegenden Erfindung insbesondere, aber nicht ausschließlich kleine Behälter mit einem im Wesentlichen kreisförmigen Querschnitt zu verstehen, z. B. Flaschen oder Dosen oder Gläser, die jeweils den Gepflogenheiten entsprechend aus Glas, Metall oder Kunststoff bestehen können. Unter dem Begriff "Lagerelement" wird im Zusammenhang mit der vorliegenden Erfindung insbesondere, aber nicht ausschließlich ein insbesondere stiftförmiges Befestigungselement verstanden, welches rotierbar in eine zum jeweiligen Lagerelement passende Fassung passt. Beispiele für ein derartiges Lagerelement sind eine Schraube, eine Niete, ein Nagel, ein Bolzen oder weitere aus dem Stand der Technik bekannte Bauteile.

Die Massenverarbeitung von derartigen Behältern bzw. Behältnissen macht ein häufiges Öffnen und Schließen des Greifarmpaares notwendig. Aus dem Stand der Technik sind hierfür Öffnungs- und Schließmechanismen bekannt, bei denen an jeweils einem Greifarmpaar in geeigneter Weise ein erster Wirkgreifabschnitt einer Positionierungsvorrichtung vorgesehen ist, welcher mit einem zweiten Wirkgreifabschnitt des zweiten Greifarmpaares in Verbindung steht. Die Wirkgreifabschnitte haben sowohl die Funktion der Kraftübertragung, als auch eine Positionierungsfunktion, da sie die planare Ausrichtung der Greifarme zueinander sicherstellen.

Aus der EP 2 799 347 A1 ist eine Vorrichtung mit den Merkmalen des Oberbegriffs des Anspruchs 1 bekannt.

Ein Problem des Stands der Technik besteht darin, dass Positionierungsabschnitte großen Kräften ausgesetzt sind und folglich schnell verschleißen. Dies ist darin begründet, dass die für das Öffnen bzw. Schließen des Greifarmpaares benötigte Kraft auf nur einen Greifarm direkt wirkt und über die Wirkgreifabschnitte an den zweiten Greifarm übertragen wird. Nicht nur führt ein Ausfall eines Wirkgreifabschnitts zu einem Stillstand einer Abfüllanlage; auch sind darüber hinaus hygienische Aspekte innerhalb der fließbandtechnischen Produktionslinie, insbesondere bei Abfüllung bzw. Weiterverarbeitung von Lebensmitteln oder dergleichen, zu berücksichtigen.

Der Erfindung liegt die Aufgabe zu Grunde, die aus dem Stand der Technik bekannten Probleme zu beseitigen oder zumindest zu minimieren. Insbesondere stellt sich die Aufgabe, den hohen Verschleiß der Wirkgreifabschnitte der Greifarme zu reduzieren.

Diese Aufgabe wird erfindungsgemäß durch eine Vorrichtung nach Anspruch 1 gelöst. Demnach ist eine Vorrichtung zum Greifen, Halten und Führen von Behältern, insbesondere von flaschenähnlichen Behältern, vorgesehen, mit einem Greifarmpaar mit mindestens zwei Greifarmen, mit einer Befestigungsplatte mit mindestens zwei Bohrungen, welche jeweils ein Lagerelement zum schwenkbaren Befestigen des jeweiligen Greifarms aufweisen, wobei das erste und zweite Lagerelement jeweils an dem von dem dazugehörigen Greifarm entfernten Ende ein horizontales Betätigungselement mit einem Hebel aufweisen, wobei der Hebel des Betätigungselements des ersten Lagerelements in kraftübertragendem Kontakt mit dem Hebel des Betätigungselements des zweiten Lagerelements steht, derart, dass durch eine externe Kraft, welche auf eine am Betätigungselement des zweiten Lagerelements angebrachte Betätigungsrolle wirkt, eine direkte Kraftübertragung auf das erste Lagerelement ermöglicht wird, wodurch das Greifarmpaar von einer geschlossenen in eine geöffnete Position gebracht wird.

Ein Vorteil einer derart ausgestalteten Vorrichtung ist, dass durch den Hebel des Betätigungselements des ersten Lagerelements eine kraftübertragende Verbindung zum Hebel des Betätigungselements des zweiten Lagerelements hergestellt wird. Hierdurch wird eine externe Kraft, welche durch eine am Betätigungselement des zweiten Lagerelements angeordnete Betätigungsrolle aufgebracht wird, direkt auf das erste Lagerelement übertragen. Dies hat zur Folge, dass das Greifarmpaar von einer geschlossenen in eine geöffnete Position gebracht wird. Durch die direkte Kraftübertragung wirkt die aufgebrachte Kraft nicht nur auf das Lagerelement des einen Greifarms, sondern auf die Lagerelemente beider Greifarme gleichzeitig. Hierdurch wird der Verschleiß der Betätigungselemente reduziert. Auch wird dadurch, dass die Kraftübertragung nicht durch einen Wirkgreifabschnitt auf den anderen Wirkgreifabschnitt erfolgt, sondern durch die zylinderförmigen Hebel der Betätigungselemente durchgeführt wird, der Verschleiß der Wirkgreifabschnitte und damit die Ausfallwahrscheinlichkeit des Greifarmpaares reduziert.

Erfindungsgemäß sind die Hebel jeweils zylinderförmig ausgestaltet. Hierdurch wird eine Form verwendet, welche im Hinblick auf die Kraftübertragung und Kraftverteilung der Hebel zahlreiche aus dem Stand der Technik bekannte Vorteile mit sich bringt, insbesondere etwa die Möglichkeit, dass der zylinderförmige Hebel als Rolle ausgebildet sein kann.

In einer vorteilhaften Weiterbildung dieser Ausführungsform wirkt die auf die Betätigungsrolle wirkende externe Kraft in z-Richtung. Ein Vorteil dieser Weiterbildung besteht darin, dass die Vorrichtung in aus dem Stand der Technik bekannten Systemen verwendet werden kann, in denen die externe Kraft in z-Richtung auf die Betätigungsrolle aufgebracht wird, beispielsweise durch eine Schiene.

Vorzugsweise weisen die Betätigungselemente eine geringere Dicke als die Dicke der Befestigungsplatte auf. Dadurch ergibt sich der Vorteil, dass sowohl Material bei der Herstellung der Vorrichtung gespart, als auch das Gewicht der Vorrichtung reduziert wird.

Gemäß einer weiteren Ausführungsform überlappt das Betätigungselement des zweiten Lagerelements das Betätigungselement des ersten Lagerelements zumindest teilweise. Hierdurch werden die Dimensionen der Vorrichtung geringgehalten.

In funktioneller Hinsicht hat es sich als vorteilhaft erwiesen, dass der Durchmesser des zylinderförmigen Hebels des Betätigungselements des zweiten Lagerelements größer ist als der des zylinderförmigen Hebels des Betätigungselements des ersten Lagerelements. Ein Vorteil dieser Ausführungsform besteht darin, dass durch den größeren Durchmesser eines zylinderförmigen Hebels eine effizientere Kraftübertragung auf einen zweiten zylinderförmigen Hebel möglich ist. Dies liegt darin begründet, dass eventuell auftretende Abweichungen in den Dimensionierungen der beiden zylinderförmigen Hebel, welche beispielsweise durch Herstellungstoleranzen auftreten, nicht oder nur in sehr seltenen Fällen zu einem Verkeilen der Hebel führen.

Vorteilhafterweise zeigt das Betätigungselement des zweiten Lagerelements im geschlossenen Zustand des Greifarmpaares in x-Richtung und das Betätigungselement des ersten Lagerelements beschreibt einen Winkel zwischen 30° und 60°, vorzugsweise zwischen 40° und 50°, besonders bevorzugt zwischen 42,5° und 47,5°, beispielsweise 45° in x-Richtung. Ein Vorteil dieser Ausführungsform besteht darin, dass die Vorrichtung so äußerst platzsparend gestaltet ist und die Übertragung der Kraft zwischen den Hebeln verbessert wird.

Vorteilhafterweise weisen die mindestens zwei Greifarme auf dem von dem ersten und zweiten Lagerelement entferntem Ende eine Positionierungsvorrichtung auf, welches die auf die x-Richtung bezogene plane Positionierung der Greifarme zueinander sicherstellt. Ein Vorteil dieser Ausführungsform besteht darin, dass durch die Positionierungsvorrichtung eine exakte Positionierung der Greifarme zueinander und damit ein verbesserter Gleichlauf der Greifarme sichergestellt wird. Hierdurch wird erreicht, dass die Greifarme die jeweiligen Behälter exakt greifen können. Außerdem wird hierdurch die Kraftübertragung der Greifarme auf den jeweiligen Behälter verbessert.

In einer weiteren Ausführungsform weist die Positionierungsvorrichtung wenigstens einen Wirkeingriffsabschnitt in jedem der Greifarme auf, insbesondere einen Verzahnungsabschnitt mit zumindest segmentweise koaxial an der Greifarminnenseite angeordneten Zähnen, zum Sicherstellen der planen Positionierung der Greifarme zueinander. Durch diese an sich aus dem Stand der Technik bekannte Positionierungsvorrichtung werden die aus dem Stand der Technik bekannten Vorteile erzielt. Insbesondere wird eine exakte Positionierung der Greifarme zueinander sowie ein exakter Gleichlauf der Greifarme gewährleistet. Ein weiterer, wesentlicher Vorteil besteht darin, dass die Positionierungsvorrichtung aufgrund der vorliegenden Erfindung nur für die Positionierung verwendet wird und an sich keine Kraft überträgt, was die Lebensdauer dieser Vorrichtung wesentlich verlängert.

In funktioneller Hinsicht hat es sich als vorteilhaft erwiesen, dass die Positionierungsvorrichtung zwei gegenpolige Magnete als Kraftgeber aufweist, wobei sich der erste Magnet auf der Greifarminnenseite eines Greifarms und der zweite Magnet sich positionsdeckend mit dem ersten Magneten auf der Greifarminnenseite des zweiten Greifarms befindet. Unter dem Begriff "positionsdeckend" wird im Zusammenhang mit der vorliegenden Erfindung insbesondere, aber nicht ausschließlich eine gegenüberliegende Lage zweier Bauteile verstanden, welche im Falle einer räumlichen Annäherung oder Berührung der Bauteile zu einer formschlüssigen Verbindung führt. Durch die Verwendung einer an sich aus dem Stand der Technik bekannten Positionierungsvorrichtung werden die in Verbindung mit dieser Vorrichtung bekannten Vorteile erreicht. Insbesondere ist eine derartige Positionierungsvorrichtung wartungsarm, da weniger bewegliche und relativ unanfällig gegen Schmutz bzw. leicht zu reinigende Bauelemente verwendet werden.

In einer vorteilhaften Weiterbildung weist die Positionierungsvorrichtung ein oder mehrere Federelemente als Kraftgeber auf, vorzugsweise eine Druckfeder, Blattfeder, Schenkelfeder, oder Zugfeder, wobei sich ein Ende des Federelements auf der Greifarminnenseite eines Greifarms und sich das zweite Ende des Federelements auf der Greifarminnenseite des zweiten Greifarms befindet. Durch die Verwendung von einer oder mehreren Federelementen, welche an sich aus dem Stand der Technik sind, werden die in Verbindung mit diesen Federelementen bekannten Vorteile erreicht. Insbesondere sind Federelemente wartungsarm und unanfällig gegen Verschmutzung bzw. leicht zu reinigende Bauelemente.

Die Aufgabe wird auch durch ein Verfahren zum Betätigen einer Vorrichtung nach einem der vorhergehenden Ausführungsbeispiele gelöst, mit folgendem Verfahrensschritt: Aufbringen einer Kraft auf die Betätigungsrolle in z-Richtung, wodurch mittels des zylinderförmigen Hebels des horizontalen Betätigungselements des zweiten Lagerelements eine Kraft auf den zylinderförmigen Hebel des horizontalen Betätigungselements des ersten Lagerelements übertragen wird, wodurch das Greifarmpaar von einer geschlossenen Stellung in eine geöffnete Stellung übergeht.

Hierdurch werden die bereits beschriebenen Vorteile der Vorrichtung erreicht. Insbesondere hat es sich als Vorteil erwiesen, dass durch den zylinderförmigen Hebel des Betätigungselements des ersten Lagerelements eine kraftübertragende Verbindung zum zylinderförmigen Hebel des Betätigungselements des zweiten Lagerelements hergestellt wird. Hierdurch wird eine externe Kraft, welche durch eine am Betätigungselement des zweiten Lagerelements angebrachte Betätigungsrolle in Art einer Nockenfolgerrolle aufgebracht wird, direkt auf das erste Lagerelement übertragen. Dies hat zur Folge, dass die Greifarme des Greifarmpaars synchron von einer geschlossenen in eine geöffnete Position gebracht werden. Durch die direkte Kraftübertragung wirkt die aufgebrachte Kraft nicht nur auf das Lagerelement des einen Greifarms, sondern auf die Lagerelemente beider Greifarme gleichzeitig. Hierdurch wird der Verschleiß der Betätigungselemente reduziert. Auch wird dadurch, dass die Kraftübertragung nicht durch einen Wirkgreifabschnitt, sondern durch die zylinderförmigen Hebel der Betätigungselemente durchgeführt wird, die Ausfallwahrscheinlichkeit reduziert.

Auch hat es sich als vorteilhaft erwiesen, dass durch eine Kraft in -z-Richtung eine Kraft durch den zylinderförmigen Hebel des horizontalen Betätigungselements des ersten Lagerelements auf den zylinderförmigen Hebel des horizontalen Betätigungselements des zweiten Lagerelements übertragen wird, wodurch das Greifarmpaar von der geschlossenen Stellung in eine geöffnete Stellung übergeht. Der Vorteil besteht darin, dass die externe Kraft direkt auf das erste Lagerelement übertragen wird. Dies hat zur Folge, dass das Greifarmpaar von einer geschlossenen in eine geöffnete Position gebracht wird. Durch die direkte Kraftübertragung wirkt die aufgebrachte Kraft nicht nur auf das Lagerelement des einen Greifarms, sondern auf die Lagerelemente beider Greifarme gleichzeitig. Hierdurch wird der Verschleiß der Betätigungselemente reduziert. Auch wird dadurch, dass die Kraftübertragung nicht durch einen Wirkgreifabschnitt, sondern durch die zylinderförmigen Hebel der Betätigungselemente erfolgt, die Ausfallwahrscheinlichkeit der erfindungsgemäßen Vorrichtung weiter reduziert.

In einer weiteren vorteilhaften Ausführungsform wird die Bewegung durch eine externe Kraft, welche auf die Betätigungsrolle wirkt, ausgelöst. Ein Vorteil dieser Ausführungsform besteht darin, dass das Verfahren mit einem aus dem Stand der Technik bekannten Verfahren kombiniert werden kann, in dem die externe Kraft beispielsweise durch eine Schiene auf die Betätigungsrolle aufgebracht wird.

Weitere Einzelheiten und Vorteile der Erfindung sollen nun anhand zweier in den Zeichnungen dargestellter und bevorzugter Ausführungsbeispiele näher erläutert werden. Es zeigen:
- Figur 1: Eine Ansicht von unten auf eine erfindungsgemäße Vorrichtung
- Figur 2: Eine Schnittansicht entlang der Achse A-A der Figur 1
- Figur 3: Eine weitere erfindungsgemäße Ausführungsform in Anlehnung an Figur 1 mit einem Magnetpaar als Kraftgeber
- Figur 4: Eine weitere erfindungsgemäße Ausführungsform in Anlehnung an Figur 1 mit einer Druckfeder als Kraftgeber
- Figur 5: Eine weitere erfindungsgemäße Ausführungsform in Anlehnung an Figur 1 mit einer Blattfeder als Kraftgeber
- Figur 6: Eine Systemübersicht mit mehreren erfindungsgemäßen Vorrichtungen

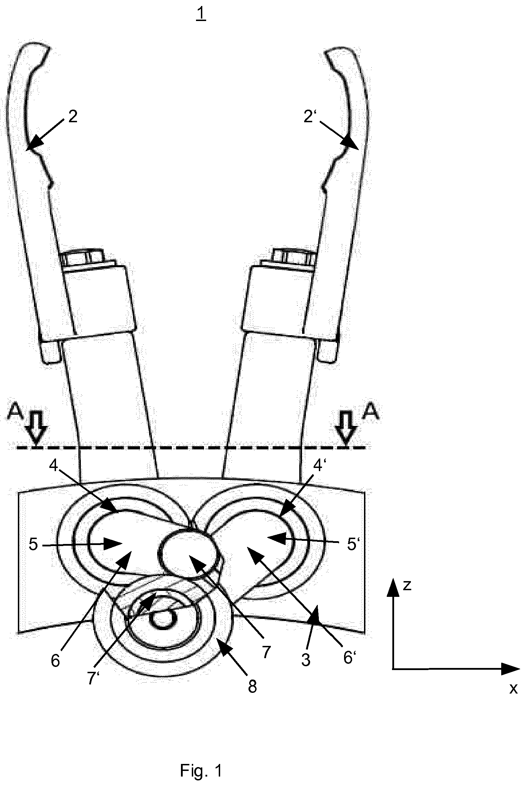

Die Figur 1 zeigt eine Ansicht von unten auf eine erfindungsgemäße Vorrichtung mit einem Greifarmpaar 1, welches zwei Greifarme 2, 2' aufweist. Auch weist die Vorrichtung eine Befestigungsplatte 3 auf, mit zwei Bohrungen 4, 4', welche in der abgebildeten Ausführungsform eine runde Form aufweisen. In diesen Bohrungen 4, 4' sind jeweils Lagerelemente 5, 5' (in der Ansicht der Figur 1 durch die horizontalen Betätigungselemente des ersten bzw. zweiten Greifarmpaares 6, 6'verdeckt) zum schwenkbaren Befestigen des jeweiligen Greifarms 2, 2' vorgesehen. Diese Lagerelemente 5, 5' besitzen eine rundliche Form, wobei selbstverständlich auch eine beliebige andere Form wählbar ist, solange diese den Effekt sicherstellt, dass der jeweilige Greifarm 2, 2' schwenkbar befestigt werden kann. Das erste und zweite Lagerelement 5, 5' weist jeweils an dem von dem dazugehörigen Greifarm 2, 2' entfernten Ende ein horizontales Betätigungselement 6, 6' mit einem zylinderförmigen Hebel 7, 7'auf. Aus der Figur 1 ist ersichtlich, dass das Betätigungselement 6' des zweiten Lagerelements 5' das Betätigungselement 6 des ersten Lagerelements 5 zumindest teilweise überlappt. Die Anordnung der zylinderförmigen Hebel 7, 7' ist derart, dass durch eine externe Kraft, welche auf die am Betätigungselement 6' des zweiten Lagerelements 5' angebrachte Betätigungsrolle 8 wirkt, eine direkte Kraftübertragung auf das erste Lagerelement 5 ermöglicht wird, wodurch die Greifarme 2, 2' synchron von einer geschlossenen in eine geöffnete Position gebracht werden.

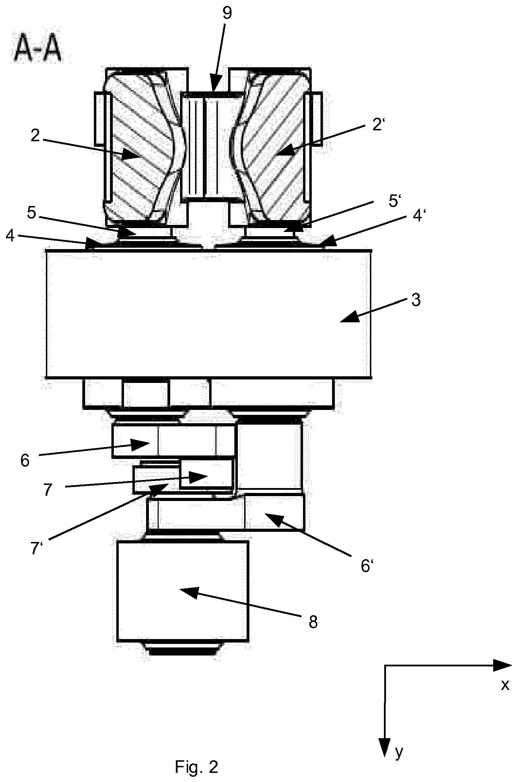

Figur 2 ist eine Ansicht entlang der Schnittachse A-A, wie in Figur 1 eingezeichnet. Die Blickrichtung ist in Richtung der in Figur 1 eingezeichneten Pfeile der Achse A-A.

In Figur 2 ist die Befestigungsplatte 3 zu erkennen, welche zwei Bohrungen 4, 4' aufweist. Ähnlich der Figur 1 sind in diesen Bohrungen 4, 4' Lagerelemente 5, 5' vorgesehen, welche eine schwenkbare Befestigung des jeweiligen Greifarms 2, 2' sicherstellen. Ein Ende des jeweiligen Lagerelements 5, 5' mündet im jeweiligen Greifarm 2, 2'. Das erste und zweite Lagerelement 5, 5' weisen jeweils an dem von dem dazugehörigen Greifarm 2, 2' entferntem Ende ein horizontales Betätigungselement 6, 6' mit einem zylinderförmigen Hebel 7, 7' auf. Das entfernte Ende findet sich in der abgebildeten Ausführungsform in y-Richtung. Der zylinderförmige Hebel 7 des Betätigungselements 6 des ersten Lagerelements 5 steht in kraftübertragendem Kontakt mit dem zylinderförmigen Hebel 7' des Betätigungselements 6' des zweiten Lagerelements 5'. Auch ist es aus der Figur 2 ersichtlich, dass es zwischen dem zylinderförmigen Hebel 7 des Betätigungselements 6 des ersten Lagerelements 5 und dem Betätigungselement 6' des zweiten Lagerelements 5' einen geringen Abstand im Bereich von 0,5 mm bis 10 mm, vorzugsweise 1 mm bis 7,5 mm, besonders bevorzugt 1,5 mm bis 5 mm gibt. Die Anordnung der zylinderförmigen Hebel 7, 7' ist derart, dass durch eine externe Kraft, welche auf die am Betätigungselement 6' des zweiten Lagerelements 5' angebrachte Betätigungsrolle 8 wirkt, eine direkte Kraftübertragung auf das erste Lagerelement 5 ermöglicht wird, wodurch die Greifarme 2, 2' synchron von einer geschlossenen in eine geöffnete Position gebracht werden. Vorliegend ist die z-Achse diejenige, welche aus der Blattebene herauszeigt. Durch eine externe Kraft, welche entgegen dieser z-Achse auf die Betätigungsrolle 8 wirkt, wird eine Kraft auf die Betätigungsrolle 8 übertragen. Diese Kraft wiederum wird über den zylinderförmigen Hebel 7' auf den zylinderförmigen Hebel 7 des Betätigungselements 6 des ersten Lagerelements 5 übertragen. Somit werden gleichzeitig sowohl der Greifarm 2, als auch der Greifarm 2' mit einer Kraft beaufschlagt, welche den Übergang von der geschlossenen Stellung in die geöffnete Stellung bewirkt. Aus der Figur 2 ist erkennbar, dass der Durchmesser des zylinderförmigen Hebels 7' des Betätigungselements 6' des zweiten Lagerelements 5' größer ist als der Durchmesser des zylinderförmigen Hebels 7 des Betätigungselements 6 des ersten Lagerelements 5. Die Betätigungsrolle 8 befindet sich, bezogen auf die horizontale Ausrichtung, in der vorliegenden Ausführungsform der x-Achse, im geöffneten Zustand der Greifarme 2, 2' näher an dem zweiten Lagerelement 5' als am ersten Lagerelement 5.

Auf der Oberseite der Befestigungsplatte 3, in der vorliegenden Ausführungsform in y-Richtung, befinden sich die Greifarme 2, 2'. Diese sind in ihrer horizontalen Position durch die Positionierungsvorrichtung 9 gesichert. Diese Positionierungsvorrichtung 9 weist einen Wirkeingriffsabschnitt in jedem der Greifarme 2, 2' auf, um die planare Positionierung der Greifarme 2, 2' zueinander sicherzustellen. Nicht in der Figur 2 abgebildet sind zwei gegenpolige Magnete, von denen sich jeweils einer auf der Greifarminnenseite eines Greifarms 2, 2' befindet. Diese gegenpoligen Magnete sich derart ausgerichtet, dass sie im Falle eines Schließens des Greifarmpaares 1 deckungsgleich aufeinandertreffen und sich durch die gegenpolige Ausrichtung gegenseitig anziehen.

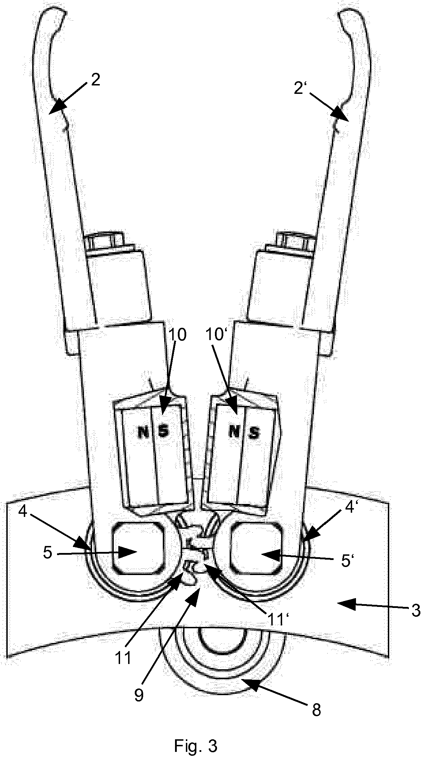

Besagte gegenpolige Magnete 10, 10' sind in der Ausführungsform der Figur 3 exemplarisch dargestellt. Betreffend die Funktionsweise wird auf die Beschreibung der Figuren 1 und 2 verwiesen. In der Figur 3 ist der erste Magnet 10 in einer Nord/Süd-Konfiguration, wodurch der zweite Magnet 10' ebenfalls in einer Nord/Süd-Kombination angebracht ist, um die Anziehung der gegenpoligen Magnete zu bewirken. Es ist selbstverständlich, dass auch eine Süd/Nord-Kombination verwendet werden kann. Mit anderen Worten, die Magnete 10, 10' können derart gedreht werden, dass der erste Magnet 10 auf der Greifarminnenseite des Greifarms 2 mit dem Nordpol in Richtung des zweiten Magneten 10' der Greifarminnenseite des Greifarms 2' zeigt, was wiederum bedeutet, dass der zweite Magnet 10' auf der Greifarminnenseite des Greifarms 2' mit dem Südpol in Richtung des ersten Magneten 10 der Greifarminnenseite des Greifarms 2 zeigt.

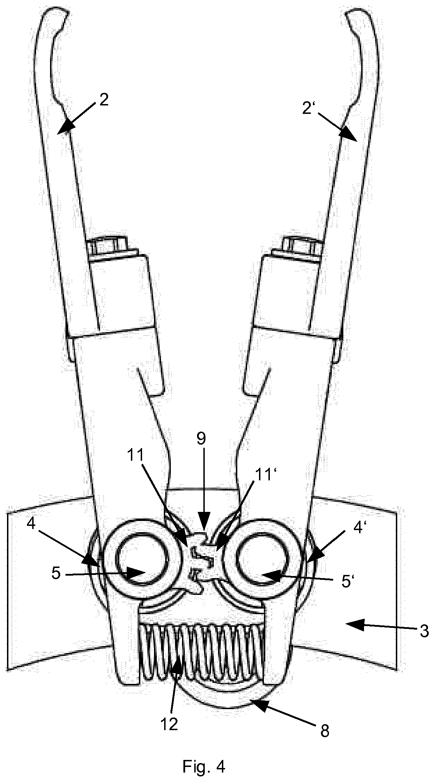

Die Figur 4 zeigt eine weitere Ausführungsform, in der die Positionierungsvorrichtung 9 eine Druckfeder 12 aufweist. Jeweils ein Ende dieser Druckfeder 12 ist an jeweils einer Verlängerung jeweils eines Greifarms 2, 2' angebracht, wodurch durch die Kraft der Druckfeder 12 das Greifarmpaar 2, 2' von einer geöffneten in eine geschlossene Position gebracht wird.

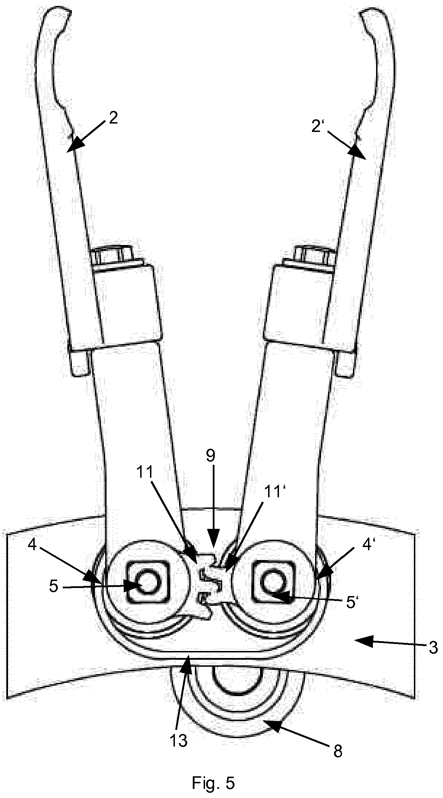

Die Figur 5 ist ähnlich zu der in Figur 4 gezeigten Ausführungsform, wobei anstatt der Druckfeder 12 eine Blattfeder 13 verwendet wird. Durch die Druckkraft der Blattfeder 13 wird das Greifarmpaar 2, 2' von einer geöffneten in eine geschlossene Position gebracht.

Betreffend die Funktionalität der Ausführungsformen der Figuren 4 und 5 wird auf die Beschreibung der Figuren 1 und 2 hingewiesen.

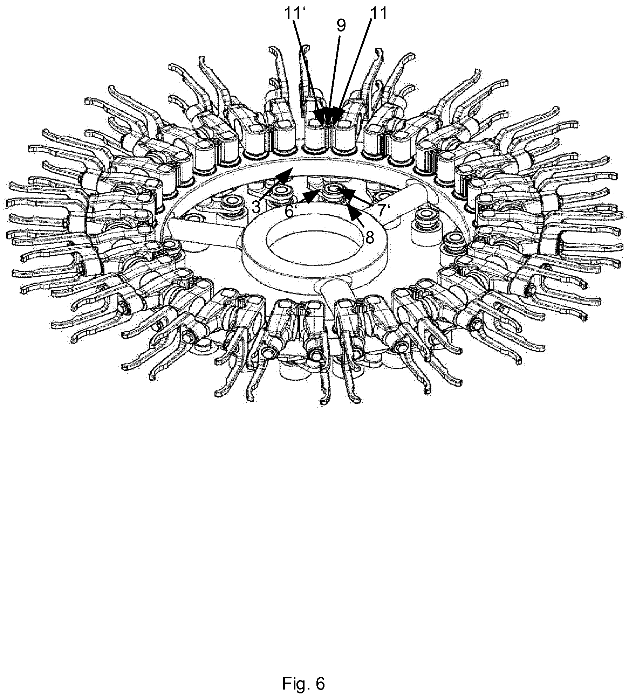

Die Figur 6 zeigt eine Systemübersicht mit mehreren erfindungsgemäßen Vorrichtungen. Es wird darauf hingewiesen, dass diese erfindungsgemäßen Vorrichtungen unter Bezug auf die vorhergehenden Figuren bereits erläutert wurden. Gut zu erkennen in der Figur 3 ist der jeweilige Wirkgreifabschnitt 11, 11' der Positionierungsvorrichtung 9 mit den segmentweise koaxial an der Greifarminnenseite angeordneten Zähnen. Auch ist es ersichtlich, dass durch eine Krafteinwirkung auf die Betätigungsrolle 8 ein Übergang von der in Figur 3 dargestellten geschlossenen Position in die geöffnete Position durchgeführt wird. Es sei auch darauf hingewiesen, dass die abgebildete Befestigungsplatte 3 der Figur 3 rein exemplarisch ist und selbstverständlich andere, aus dem Stand der Technik bekannte Befestigungsplatten verwendet werden können. Auch die Form der Greifarme ist rein exemplarisch und aus dem Stand der Technik bekannte Greifarme können in der Vorrichtung der vorliegenden Erfindung verwendet werden.

### Bezugszeichenliste

- 1: Greifarmpaar
- 2: erster Greifarm
- 2': zweiter Greifarm
- 3: Befestigungsplatte
- 4: erste Bohrung
- 4': zweite Bohrung
- 5: Lagerelement des ersten Greifarmpaares
- 5': Lagerelement des zweiten Greifarmpaares
- 6: horizontales Betätigungselement des ersten Greifarmpaares
- 6': horizontales Betätigungselement des zweiten Greifarmpaares
- 7: zylinderförmiger Hebel des ersten Greifarmpaares
- 7': zylinderförmiger Hebel des zweiten Greifarmpaares
- 8: Betätigungsrolle
- 9: Positionierungsvorrichtung
- 10: erster Magnet
- 10': zweiter Magnet
- 11: erster Wirkgreifabschnitt
- 11': zweiter Wirkgreifabschnitt
- 12: Druckfeder
- 13: Blattfeder

## Patentansprüche

1. Vorrichtung zum Greifen, Halten und Führen von Behältern, insbesondere von flaschenähnlichen Behältern, mit:
einem Greifarmpaar (1), mit mindestens zwei Greifarmen (2, 2');
einer Befestigungsplatte (3) mit mindestens zwei Bohrungen (4, 4'), welche jeweils ein Lagerelement (5, 5') zum schwenkbaren Befestigen des jeweiligen Greifarms (2, 2') aufweisen,
wobei das erste und zweite Lagerelement (5, 5') jeweils an dem von dem dazugehörigen Greifarm (2, 2') entfernten Ende ein horizontales Betätigungselement (6, 6') mit einem Hebel (7, 7') aufweisen, wobei der Hebel (7) des Betätigungselements (6) des ersten Lagerelements (5) in kraftübertragendem Kontakt mit dem Hebel (7') des Betätigungselement (6') des zweiten Lagerelements (5') steht, derart,
dass durch eine externe Kraft, welche auf eine am Betätigungselement (6') des zweiten Lagerelements (5') angebrachte Betätigungsrolle (8) wirkt, eine direkte Kraftübertragung auf das erste Lagerelement (5) ermöglicht wird, wodurch das Greifarmpaar (1) von einer geschlossenen in eine geöffnete Position gebracht wird, und
**dadurch gekennzeichnet, dass**
die Hebel (7, 7') jeweils zylinderförmig ausgestaltet sind.

2. Vorrichtung nach Anspruch 1,
**dadurch gekennzeichnet, dass**
die auf die Betätigungsrolle (8) wirkende externe Kraft in z-Richtung wirkt.

3. Vorrichtung nach Anspruch 1 oder 2,
**dadurch gekennzeichnet, dass**
die Betätigungselemente (6, 6') eine geringere Dicke als die Dicke der Befestigungsplatte (3) aufweisen.

4. Vorrichtung nach einem der vorhergehenden Ansprüche,
**dadurch gekennzeichnet, dass**
das Betätigungselement (6') des zweiten Lagerelements (5') das Betätigungselement (6) des ersten Lagerelements (5) zumindest teilweise überlappt.

5. Vorrichtung nach einem der vorhergehenden Ansprüche,
**dadurch gekennzeichnet, dass**
der Durchmesser des Hebels (7') des Betätigungselements (6') des zweiten Lagerelements (5') größer ist als der des Hebels (7) des Betätigungselements (6) des ersten Lagerelements (5).

6. Vorrichtung nach einem der vorhergehenden Ansprüche,
**dadurch gekennzeichnet, dass**
das Betätigungselement (6') des zweiten Lagerelements (5') im geschlossenen Zustand des Greifarmpaares (1) in x-Richtung zeigt und das Betätigungselement (6) des ersten Lagerelements (5) einen Winkel zwischen 30° und 60°, vorzugsweise zwischen 40° und 50°, besonders bevorzugt zwischen 42,5° und 47,5°, beispielsweise 45° in -x-Richtung beschreibt.

7. Vorrichtung nach einem der vorhergehenden Ansprüche,
**dadurch gekennzeichnet, dass**
die mindestens zwei Greifarme (2, 2') auf dem von dem ersten und zweiten Lagerelement entferntem Ende eine Positionierungsvorrichtung (9) aufweist, welches die auf die x-Richtung bezogene plane Positionierung der Greifarme (2, 2') zueinander sicherstellt.

8. Vorrichtung nach Anspruch 7,
**dadurch gekennzeichnet, dass**
die Positionierungsvorrichtung (9) wenigstens einen Wirkeingriffsabschnitt (11, 11') in jedem der Greifarme (2, 2') aufweist, insbesondere einen Verzahnungsabschnitt mit zumindest segmentweise koaxial an der Greifarminnenseite angeordneten Zähnen, zum Sicherstellen der planen Positionierung der Greifarme (2, 2') zueinander.

9. Vorrichtung nach Anspruch 7 oder 8,
**dadurch gekennzeichnet, dass**
die Positionierungsvorrichtung (9) zwei gegenpolige Magnete (10, 10') als Kraftgeber aufweist, wobei sich der erste Magnet (10) auf der Greifarminnenseite eines Greifarms (2) und sich der zweite Magnet (10') positionsdeckend mit dem ersten Magneten (10) auf der Greifarminnenseite des zweiten Greifarms (2') befindet.

10. Vorrichtung nach Anspruch 7 oder 8,
**dadurch gekennzeichnet, dass**
die Positionierungsvorrichtung (9) ein oder mehrere Federelemente als Kraftgeber aufweist, vorzugsweise eine Druckfeder (12), Blattfeder (13), Schenkelfeder, oder Zugfeder, wobei sich ein Ende des Federelements auf der Greifarminnenseite eines Greifarms (2) und sich das zweite Ende des Federelements auf der Greifarminnenseite des zweiten Greifarms (2') befindet.

11. Verfahren zum Betätigen einer Vorrichtung nach einem der vorhergehenden Ansprüche, mit folgendem Verfahrensschritt: Aufbringen einer Kraft auf die Betätigungsrolle (8) in z-Richtung, wodurch durch den Hebel (7') des horizontalen Betätigungselements (6') des zweiten Lagerelements (5') auf den Hebel (7) des horizontalen Betätigungselements (6) des ersten Lagerelements (5) eine Kraft übertragen wird, wodurch das Greifarmpaar (1) von einer geschlossenen Stellung in eine geöffnete Stellung übergeht.

12. Verfahren nach Anspruch 11,
**dadurch gekennzeichnet, dass**
durch eine Kraft in -z-Richtung eine Kraft durch den Hebel (7) des horizontalen Betätigungselements (6) des ersten Lagerelements (5) auf den Hebel (7') des horizontalen Betätigungselements (6') des zweiten Lagerelements (5') übertragen wird, wodurch das Greifarmpaar (1) von der geschlossenen Stellung in eine geöffnete Stellung übergeht.

13. Verfahren nach Anspruch 11 oder 12,
**dadurch gekennzeichnet, dass**
die Bewegung durch eine externe Kraft, welche auf die Betätigungsrolle (8) wirkt, ausgelöst wird.

## Claims

1. A device for gripping, retaining and guiding containers, in particular bottle-like containers, having:
a gripping arm pair (1), having at least two gripping arms (2, 2');
a fastening plate (3), having at least two bores (4, 4') which each have a bearing element (5, 5') for pivotably fastening the respective gripping arm (2, 2'),
the first and second bearing elements (5, 5') each comprising, at the end remote from the associated gripping arm (2, 2'), a horizontal actuating element (6, 6') having a lever (7, 7'),
the lever (7) of the actuating element (6) of the first bearing element (5) being in force-transmitting contact with the lever (7') of the actuating element (6') of the second bearing element (5') in such a way that,
by means of an external force acting on an actuating roller (8) mounted on the actuating element (6') of the second bearing element (5'), a direct force transmission to the first bearing element (5) is made possible, as a result of which the gripping arm pair (1) is brought from a closed position into an open position, and
**characterised in that**
the levers (7, 7') each have a cylindrical configuration.

2. The device according to Claim 1,
**characterised in that**
the external force acting on the actuating roller (8) acts in the z-direction.

3. The device according to Claim 1 or 2,
**characterised in that**
the actuating elements (6, 6') have a smaller thickness than the thickness of the fastening plate (3).

4. The device according to any one of the preceding claims,
**characterised in that**
the actuating element (6') of the second bearing element (5') at least partially overlaps the actuating element (6) of the first bearing element (5).

5. The device according to any one of the preceding claims,
**characterised in that**
the diameter of the lever (7') of the actuating element (6') of the second bearing element (5') is larger than that of the lever (7) of the actuating element (6) of the first bearing element (5).

6. The device according to any one of the preceding claims,
**characterised in that**
the actuating element (6') of the second bearing element (5') in the closed state of the gripping arm pair (1) points in the x-direction and the actuating element (6) of the first bearing element (5) describes an angle between 30° and 60°, preferably between 40° and 50°, particularly preferably between 42.5° and 47.5°, for example 45° in the x-direction.

7. The device according to any one of the preceding claims,
**characterised in that**
the at least two gripping arms (2, 2') have a positioning device (9) on the end remote from the first and second bearing element, which ensures the planar positioning of the gripping arms (2, 2') relative to one another based on the x-direction.

8. The device according to Claim 7,
**characterised in that**
the positioning device (9) has at least one active engagement section (11, 11') in each of the gripping arms (2, 2'), in particular a toothed section having teeth arranged coaxially, at least segmentally, on the gripping arm inside, to ensure the planar positioning of the gripping arms (2, 2') relative to one another.

9. The device according to Claim 7 or 8,
**characterised in that**
the positioning device (9) has two magnets of opposite poles (10, 10') as force transmitters, the first magnet (10) being located on the inside of a gripping arm (2) and the second magnet (10') covering the position with the first magnet (10) being located on the inside of the second gripping arm (2').

10. The device according to Claim 7 or 8,
**characterised in that**
the positioning device (9) has one or more spring elements as force transmitters, preferably a compression spring (12), leaf spring (13), leg spring, or tension spring, one end of the spring element being located on the inside of a gripping arm (2) and the second end of the spring element being located on the inside of the second gripping arm (2').

11. A method for actuating a device according to any one of the preceding claims, having the following method step:
applying a force to the actuating roller (8) in the z-direction, as a result of which a force is transmitted by the lever (7') of the horizontal actuating element (6') of the second bearing element (5') to the lever (7) of the horizontal actuating element (6) of the first bearing element (5), as a result of which the gripping arm pair (1) transitions from a closed position into an open position.

12. The method according to Claim 11,
**characterised in that**
by means of a force in the z-direction, a force is transmitted by the lever (7) of the horizontal actuating element (6) of the first bearing element (5) to the lever (7') of the horizontal actuating element (6') of the second bearing element (5'), as a result of which the gripping arm pair (1) transitions from the closed position into an open position.

13. The method according to Claim 11 or 12,
**characterised in that**
the movement is triggered by an external force which acts on the actuating roller (8).

## Revendications

1. Dispositif pour la préhension, le maintien et le guidage de récipients, en particulier de récipients analogues à des bouteilles, présentant :
une paire (1) de bras de préhension, présentant au moins deux bras de préhension (2, 2') ;
une plaque de fixation (3) présentant au moins deux trous (4, 4'), qui présentent à chaque fois un élément palier (5, 5') pour la fixation pivotante de chaque bras de préhension (2, 2'),
dans lequel
le premier et le second élément palier (5, 5') présentent à chaque fois, au niveau de l'extrémité éloignée du bras de préhension (2, 2') qui lui est associé, un élément d'actionnement (6, 6') horizontal présentant un levier (7, 7'),
le levier (7) de l'élément d'actionnement (6) du premier élément palier (5) étant en contact avec transmission de force avec le levier (7') de l'élément d'actionnement (6') du second élément palier (5') de telle sorte
qu'une force externe, qui agit sur un rouleau d'actionnement (8) monté sur l'élément d'actionnement (6') du second élément palier (5'), permet une transmission de force directe sur le premier élément palier (5), suite à quoi la paire (1) de bras de préhension est amenée à partir d'une position fermée dans une position ouverte et
**caractérisé en ce que** les leviers (7, 7') sont à chaque fois conçus en forme de cylindre.

2. Dispositif selon la revendication 1,
**caractérisé en ce que** la force externe qui agit sur le rouleau d'actionnement (8) agit dans la direction z.

3. Dispositif selon la revendication 1 ou 2,
**caractérisé en ce que** les éléments d'actionnement (6, 6') présentent une épaisseur inférieure à l'épaisseur de la plaque de fixation (3).

4. Dispositif selon l'une des revendications précédentes,
**caractérisé en ce que** l'élément d'actionnement (6') du second élément palier (5') chevauche au moins partiellement l'élément d'actionnement (6) du premier élément palier (5).

5. Dispositif selon l'une des revendications précédentes,
**caractérisé en ce que** le diamètre du levier (7') de l'élément d'actionnement (6') du second élément palier (5') est supérieur à celui du levier (7) de l'élément d'actionnement (6) du premier élément palier (5).

6. Dispositif selon l'une des revendications précédentes,
**caractérisé en ce que** l'élément d'actionnement (6') du second élément palier (5'), dans l'état fermé de la paire (1) de bras de préhension, pointe dans la direction x et l'élément d'actionnement (6) du premier élément palier (5) décrit un angle entre 30° et 60°, de préférence entre 40° et 50°, de manière particulièrement préférée entre 42,5° et 47,5°, par exemple de 45° dans la direction x.

7. Dispositif selon l'une des revendications précédentes,
**caractérisé en ce que** lesdits au moins deux bras de préhension (2, 2') présentent, sur l'extrémité éloignée du premier et du second élément palier, un dispositif de positionnement (9), qui assure le positionnement plan par rapport à la direction x des bras de préhension (2, 2') l'un par rapport à l'autre.

8. Dispositif selon la revendication 7,
**caractérisé en ce que** le dispositif de positionnement (9) présente au moins une section de mise en prise active (11, 11') dans chacun des bras de préhension (2, 2'), en particulier une section dentée présentant des dents agencées au moins par segments coaxialement sur la face interne du bras de préhension, pour assurer le positionnement plan des bras de préhension (2, 2').

9. Dispositif selon la revendication 7 ou 8,
**caractérisé en ce que** le dispositif de positionnement (9) présente deux aimants (10, 10') de pôles opposés en tant générateur de force, le premier aimant (10) se trouvant sur la face interne d'un bras de préhension (2) et le second aimant (10') se trouvant, avec un recouvrement de la position du premier aimant (10), sur la face interne du second bras de préhension (2').

10. Dispositif selon la revendication 7 ou 8,
**caractérisé en ce que** le dispositif de positionnement (9) présente un ou plusieurs éléments à ressort en tant que générateur de force, de préférence un ressort de compression (12), un ressort à lame (13), un ressort hélicoïdal ou un ressort de traction, une extrémité de l'élément à ressort se trouvant sur la face interne d'un bras de préhension (2) et la seconde extrémité de l'élément à ressort se trouvant sur la face interne du second bras de préhension (2').

11. Procédé d'actionnement d'un dispositif selon l'une des revendications précédentes, présentant l'étape de procédé suivante :
application d'une force sur le rouleau d'actionnement (8) dans la direction z, suite à quoi le levier (7') de l'élément d'actionnement (6') horizontal du second élément palier (5') transmet une force sur le levier (7) de l'élément d'actionnement (6) horizontal du premier élément palier (5), suite à quoi la paire (1) de bras de levier passe d'une position fermée dans une position ouverte.

12. Procédé selon la revendication 11,
**caractérisé**
**en ce qu'**une force dans la direction z transmet, par le levier (7) de l'élément d'actionnement (6) horizontal du premier élément palier (5), une force sur le levier (7') de l'élément d'actionnement (6') horizontal du second élément palier (5'), suite à quoi la paire (1) de bras de levier passe de la position fermée dans une position ouverte.

13. Procédé selon la revendication 11 ou 12,
**caractérisé en ce que** le mouvement est déclenché par une force externe qui agit sur le rouleau d'actionnement (8).
